# EUROPÄISCHE PATENTANMELDUNG

(11) **EP 0 858 845 A1**
(43) Veröffentlichungstag der Anmeldung: **19.08.1998**
(21) Anmeldenummer: 98101721.3
(22) Anmeldetag: 02.02.1998
(51) Int. Cl.: B21B 38/02, B21B 37/28, G01L 5/04, G01B 7/34, G01B 13/22

(54) **Planheitsmessrolle**

(30) Priorität: 06.02.1997 DE 19704447
(71) Anmelder: SMS SCHLOEMANN-SIEMAG AKTIENGESELLSCHAFT, 40237 Düsseldorf (DE)
(72) Erfinder: Kipping, Matthias, Dipl.-Ing., 57562 Herdorf (DE); Franz, Rolf, Dipl.-Ing., 57223 Kreuztal (DE); Tuschhoff, Matthias, Dr.-Ing., 57072 Siegen (DE); Sudau, Peter, 57271 Hilchenbach (DE)
(74) Vertreter: Valentin, Ekkehard, Dipl.-Ing.

(57) **Zusammenfassung**

Um eine Anordnung und Meßrolle zum Messen der Planheit eines unter Spannung stehenden Walzbandes in einer Warmbandstraße zu schaffen, wird erfindungsgemäß vorgeschlagen, in Walzrichtung zwischen dem ersten Walzgerüst der Fertigstraße und dem Haspel mindestens eine Meßrolle anzuordnen, das Walzband über jede Meßrolle zu führen, die sich aufgrund der Bandspannung biegt und Meßwertaufnehmer zum Messen der Biegung jeder Meßrolle vorzusehen.

## Beschreibung

Die Erfindung betrifft eine Anordnung zum Messen der Planheit eines unter Spannung stehenden Walzbandes in einer Warmbandstraße mit einer Vor- und einer Fertigstraße mit mehreren Walzgerüsten sowie einem Haspel. Des weiteren betrifft die Erfindung mehrere Meßrollen, die zum Einsatz in einer solchen Anordnung bestimmt sind.

Planheitsabweichungen von Walzbändern werden durch Längenunterschiede über die Breite des Walzbandes verursacht. Da das Walzband unter Spannung steht, werden Längenunterschiede zumindest teilweise durch elastische Dehnung ausgeglichen. Eine direkte Messung der Längendifferenzen ist daher nicht möglich. Zur Ermittlung der Planheitsfehler kann jedoch die von den Längenunterschieden abhängige Zugspannungsverteilung herangezogen werden.

Zum Feststellen von Planheitsabweichungen werden bei kalt gewalzten Bändern beispielsweise Umlenkrollen verwendet. Die zugproportionale Umlenkkraft beim Umlenken des Bandes wird als Meßwert verwendet.

Aus der DE 37 21 746 A1 gehen ein Verfahren sowie eine Vorrichtung zur Messung der Planheit eines unter Spannung stehenden Walzbandes in Warmbreitbandstraßen hervor. Mit segmentierten Zugmeßrollen wird die Zugverteilung im Walzband gemessen und auf diese Weise indirekt deren Planheit bestimmt. Bei solchen segmentierten Rollen besteht die große Gefahr, daß sich die Spalten dieser in agressiven Medien eingesetzten bzw. arbeitenden Rollen zusetzen, wodurch die Funktionsweise erheblich beeinträchtigt wird.

Ausgehend von diesem Stand der Technik liegt der Erfindung die Aufgabe zugrunde, eine Anordnung und Meßrolle vorzuschlagen, die auf einem alternativen Meßprinzip beruht und die Nachteile bekannter Einrichtungen nicht aufweist.

Diese Aufgabe wird bei einer Anordnung der eingangs erwähnten Art dadurch gelöst, daß in Walzrichtung zwischen dem ersten Walzgerüst der Fertigstraße und dem Haspel mindestens eine Meßrolle angeordnet ist, das Walzband über jede Meßrolle geführt wird, die sich aufgrund der Bandspannung biegt und das Meßwertaufnehmer zum Messen der Biegung der Meßrolle vorgesehen sind.

Die erfindungsgemäße Anordnung läßt sich vorteilhaft insbesondere beim Walzen von sehr dünnen Bändern einsetzen.

Vorteilhaft werden eine oder mehrere Meßrollen zwischen den Walzgerüsten der Fertigstraße und/oder in Walzrichtung hinter dem letzten Walzgerüst der Fertigstraße und/oder vor einem Treibapparat für den Haspel und/oder zwischen dem Treibapparat und dem Haspel angeordnet.

Je nach Anordnung einer oder mehrerer Meßrollen können die von den Meßrollen erhaltenen Meßwerte zum Verschieben der Walzen der Walzgerüste in axialer Richtung, einer Veränderung der Biegung der Walzen sowie zum Schwenken von Anstellsystemen der Walzgerüste verwendet werden. Des weiteren läßt sich durch gezielte Anordnung der Meßrollen auch Einfluß auf die Kühlung des Walzbandes und/oder der Arbeitswalzen nehmen.

Ist eine Meßrolle beispielsweise zwischen dem Treibapparat und dem Haspel angeordnet, kann der von dieser Meßrolle erhaltene Meßwert zum Verschwenken des Treibapparates verwendet werden. Durch diese Maßnahme läßt sich der Bandlauf beim Aufwickeln auf den Haspeldorn regeln.

Ist der Treibapparat für den Haspel, wie üblich, hinter der Bandkühlung angeordnet, läßt sich durch eine vor dem Treibapparat für den Haspel angeordnete Meßrolle der Einfluß der Bandkühlung messen und die Bandkühlung gegebenenfalls nachregeln.

Wenn die elastisch biegbare Meßrolle hohl und in ortsfesten Lagern drehbar gelagert ist und konzentrisch zur Achse der unbelasteten Meßrolle eine sich in Achsrichtung im Inneren der Meßrolle erstreckende Halterung für mindestens einen Meßwertaufnehmer angeordnet ist, ist jeder Meßwertaufnehmer zuverlässig gegen äußere Einflüsse geschützt.

Die Halterung für die Meßwertaufnehmer ist so dimensioniert, daß der Hohlraum zwischen Halterung und Innenmantelfläche der Meßrolle für eine ungehinderte Durchbiegung der elastischen Meßrolle ausreicht.

Vorzugsweise erfassen Wegmesser die Durchbiegung der Meßrolle gegenüber der geraden Halterung. Noch genauere Rückschlüsse über die Planheit des Bandes lassen sich ziehen, wenn die ortsfesten Lager der Meßrolle in Lagerböcken gehalten sind, an denen Kraftmeßvorrichtungen angeordnet sind. Diese können die Kräfte vorteilhaft in mehreren Richtungen erfassen.

Wenn in Abständen in Achsrichtung der Halterung gleichmäßig über deren Umfang mehrere Meßwertaufnehmer, insbesondere Wegmesser angeordnet sind, lassen sich jeweils an einer Stelle der Meßrolle mehrere Meßwerte aufnehmen und daraus ein Mittelwert bilden. Die Mittelwertbildung erhöht die Meßgenauigkeit und Zuverlässigkeit. Regelmäßig genügt es, an mehreren Stellen jeweils zwei gegenüberliegende Meßwertaufnehmer vorzusehen.

Wenn die Halterung für die Meßwertaufnehmer einen Durchgang in Achsrichtung mit Verbindungen zu den Meßwertaufnehmern besitzt, lassen sich deren Versorgungsleitungen geschützt innerhalb der Halterung führen.

Anstelle elektrischer Meßwertaufnehmer ist eine Wegmessung beispielsweise auch mit Hilfe eines Lasers möglich. Als Signalleitung kommt dann eine Glasfaserleitung in Frage.

Über den Druckabfall in einem hydrostatischen System lassen sich Rückschlüsse auf die Durchbiegung der Rolle und damit die Bandplanheit ziehen, wenn die elastisch biegbare Meßrolle hohl und in ortsfesten Lagern drehbar gelagert ist, sich im Inneren der Meßrolle ein Formkörper mit Durchgängen für ein hydrostatisches Medium erstreckt, wobei die Durchgänge zumindest teilweise in dem zwischen Meßrolle und Formkörper gebildeten Hohlraum münden und mit den Durchgängen zumindest eine Durchflußmeßvorrichtung (z. B. direkte Messung mittels Propeller oder Ultraschall; Druckabfall über eine Drossel) verbunden ist. In Abhängigkeit von der Spannung des Walzbandes ändert sich der Volumenstrom in den Durchgängen des Formkörpers. Der Volumenstrom kann bei einer solchen Ausgestaltung der Erfindung vorteilhaft außerhalb der Meßrolle mit der Durchflußmeßvorrichtung unbeeinflußt von der Wärme des Walzbandes erfaßt werden. Als Nebeneffekt führt das hydrostatische Medium Wärme von der Meßrolle ab. Darüber hinaus unterstützt das hydrostatische Medium die zumeist dünnwandig ausgeführte, elastisch biegbare, hohle Meßrolle wirksam im Bereich der Auflage des Walzbandes.

Als geeignete hydrostatische Medien haben sich beispielsweise Öl, Wasser, jedoch auch Luft herausgestellt.

Zur Erhöhung der Meßgenauigkeit sind die Durchgänge für das hydrostatische Medium im Bereich ihrer Mündungen vorzugsweise taschenförmig erweitert.

Vorzugsweise sind eine Vielzahl von taschen- oder trichterförmig erweiterten Mündungen der Durchgänge über die Breite der Meßrolle angeordnet.

Nachfolgend wird die Erfindung anhand mehrerer Ausführungsbeispiele des näheren erläutert:

Es zeigen
- Figur 1: Eine Meßrolle mit im Inneren angeordneten Wegmeßsystemen,
- Figur 2: eine Meßrolle mit hydrostatischer Unterstützung sowie
- Figur 3: im Längsschnitt eine Meßrolle gemäß Figur 2 mit - jeweils schematisch - in der rechten Hälfte gezeigter Durchflußmessung über einen Differenzdruck und in der linken Hälfte gezeigter direkter Durchflußmessung.

Eine mit 1 bezeichnete elastisch biegbare Meßrolle ist über zwei Pendelrollenlager 2, die sich an Lagerböcken 3 abstützen, gelagert. Die Lagerböcke 3 ruhen auf einer Traverse 5. Zwischen den Lagerböcken 3 und der Traverse 5 befindet sich jeweils eine Kraftmeßvorrichtung 4.

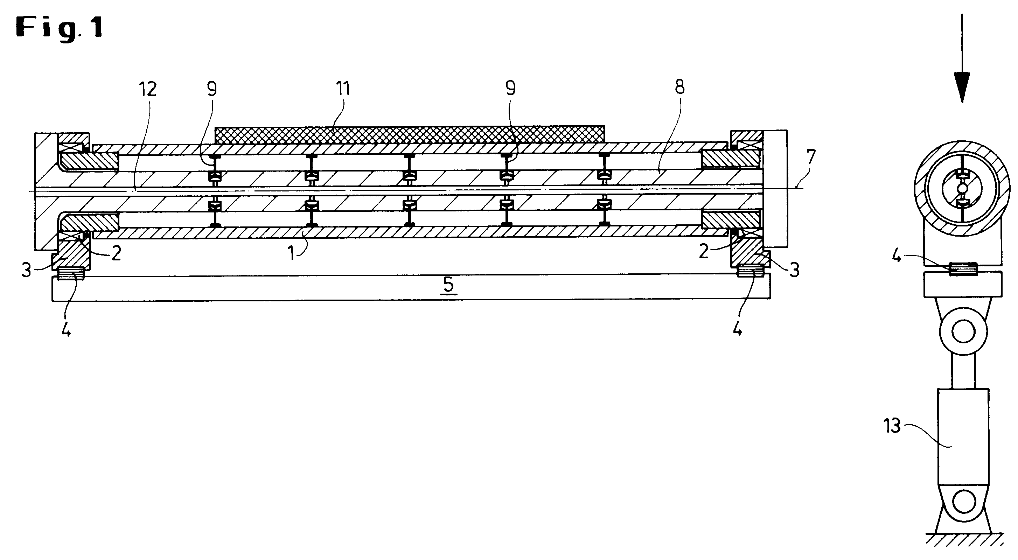

Konzentrisch und in Richtung zu einer Achse 7 der in Figur 1 unbelastet dargestellten Meßrolle erstreckt sich im Inneren der Meßrolle 1 eine Halterung 8. Die Halterung 8 ist ebenfalls in den Lagerböcken 3 gestützt.

Über die Breite der Rolle 1 sind in regelmäßigen Abständen jeweils gegenüberliegend Wegmeßsysteme 9 an der Halterung 8 angeordnet. Aus den unterschiedlichen Signalen der Wegmeßsysteme 9 kann mittels eines in der Zeichnung nicht dargestellten Rechners die Biegelinie der Rolle 1 unter der Last eines Walzbandes 11 ermittelt werden. Durch die jeweils gegenüberliegende Anordnung von 2 Wegmessern 9 besteht die Möglichkeit, an einer Stelle der Rolle 1 jeweils zwei Meßwerte aufzunehmen und daraus einen Mittelwert zu bilden. Dies erhöht die Meßgenauigkeit und -zuverlässigkeit. Über einen Durchgang 12 in Achsrichtung der Halterung 8 sind die in der Zeichnung nicht dargestellten elektrischen Verbindungsleitungen zu den Wegmeßsystemen 9 geführt.

Aus der Biegelinie und den Signalen der Kraftmeßvorrichtungen 4 läßt sich zuverlässig auf die Spannungsverteilung im Walzband 11 und damit dessen Planheit schließen.

Hervorzuheben bei dieser Ausführungsform ist die geschützte Anordnung der Wegmeßsysteme 9 im Inneren der Rolle 1.

Aus der Seitenansicht der Meßrolle 1 ist erkennbar, daß die Traverse 5, die die Lagerböcke 3 ortsfest auf Abstand hält, selbst auf einem Hydraulikzylinder 13 angeordnet ist, mit dem die Rolle 1 von unten gegen das Walzband 11 angedrückt wird. Die Traverse 5 kann alternativ beweglich gelagert sein, so daß sich in diesem Fall die Rolle 1 in den Bandlauf einfahren bzw. vorzugsweise am Bandanfang und -ende in eine geschützte Position verfahren läßt.

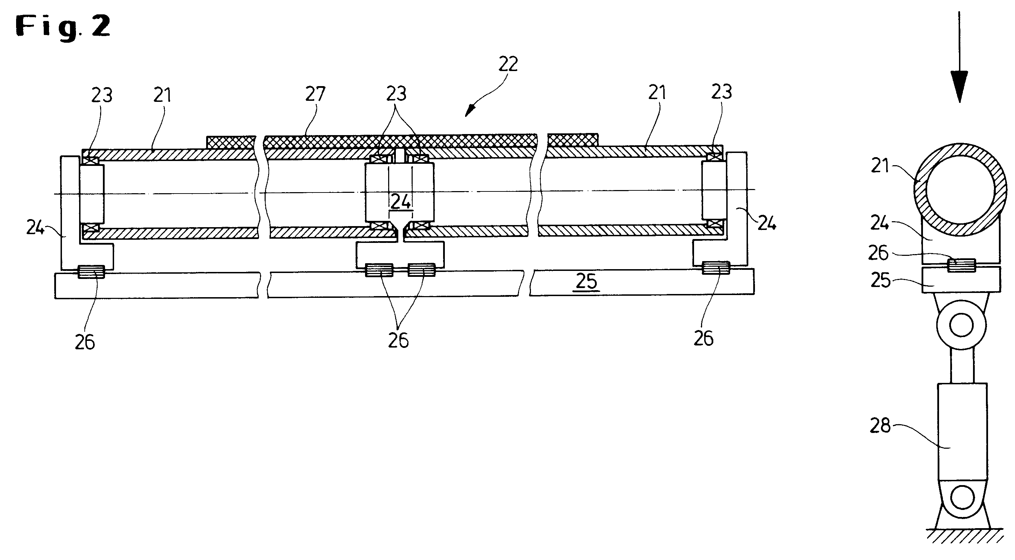

Figur 2 zeigt eine insgesamt mit 31 bezeichnete Meßrolle mit einem hydrostatischen System zum Aufnehmen der Meßwerte.

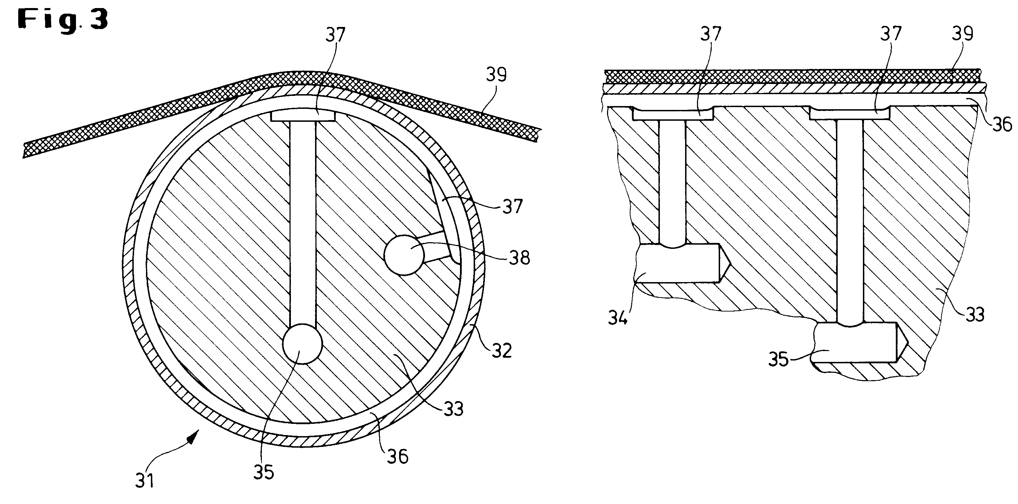

Eine elastisch biegbare Rolle 32 ist im Inneren hohl und in Figur 2 nicht gezeigten ortsfesten Lagern drehbar gelagert. Im Inneren der Meßrolle 32 ist ein zylindrischer Formkörper 33 koaxial zur Rolle 32 angeordnet. Axial durch den Formkörper 33 erstrecken sich mehrere Durchgänge 34, 35, die in ihren Endbereichen rechtwinklig abgewinkelt sind und in einem zwischen der Meßrolle 32 und dem Formkörper 33 gebildeten Hohlraum 36 münden. Im Bereich der Mündungen sind die Durchgänge 34, 35 zu Taschen 37 a oder Trichter 37 b (vgl. Figur 3; ein solcher Trichter ist dort schematisch angedeutet) erweitert. Seitlich von den kaskadenförmig angeordneten Durchgängen 34, 35 für den Zufluß des hydrostatischen Mediums ist ein weiterer Durchgang 38 angeordnet, der als Abfluß des zufließenden hydrostatischen Mediums dient. Auch der als Abfluß dienende Durchgang 38 ist im Bereich seiner Mündung zu dem Hohlraum 36 taschenförmig erweitert.

Das über die Rolle 32 geführte Walzband 39 biegt die relativ dünnwandige Rolle 32 durch. Der Zufluß des Hydrostatikmediums durch die Durchgänge 34, 35 nimmt in Folge der Durchbiegung ab. Die Änderung des Durchflusses ist ein Maß für die im Bereich jeder Tasche 37 a bzw. eines jeden Trichters 37 b wirkende Spannung des Walzbandes 39. Die Durchflußänderung kann direkt gemessen werden oder aus dem Druckabfall an einer Drosselstelle bestimmt werden; beide Möglichkeiten sind in Figur 3 dargestellt. Die direkt arbeitende Durchflußmeßvorrichtung 40 gemäß der linken Zeichnungshälfte besitzt Propeller 41 - alternativ ist z. B. auch eine Ultraschallmessung möglich - in den Durchgängen 34, 35 und die von diesem erfaßte Strömungsmenge wird in einem Meßwertwandler 42 in ein für die Regelung elektrisches Signal umgewandelt. Eine andere Durchflußmeßvorrichtung 43 ist in der rechten Zeichnungshälfte gezeigt. Hierbei sind in den Durchgängen 34, 35 Drosseln 44 vorgesehen, die eine Durchflußänderung aus dem Differenzdruck ermitteln, der als elektrisches Signal von den Meßwertwandlern 42 zur Regelung gelangt.

Das hydrostatische Medium dient gleichzeitig zur Kühlung der Meßrolle 32 sowie des Walzbandes 38.

## Patentansprüche

1. Anordnung zum Messen der Planheit eines unter Spannung stehenden Walzbandes in einer Warmbandstraße mit einer Vor- und einer Fertigstraße mit mehreren Walzgerüsten sowie einem Haspel,
**dadurch gekennzeichnet**, daß
- in Walzrichtung zwischen dem ersten Walzgerüst der Fertigstraße und dem Haspel mindestens eine Meßrolle (1, 22, 31) angeordnet ist,
- das Walzband (11, 27, 39) über jede Meßrolle geführt wird, die sich aufgrund der Bandspannung biegt und
- Meßwertaufnehmer (4, 9, 26, 34, 35, 38) zum Messen der Biegung jeder Meßrolle vorgesehen sind.

2. Anordnung nach Anspruch 1,
**dadurch gekennzeichnet**,
daß eine oder mehrere Meßrollen
- zwischen den Walzgerüsten der Fertigstraße und/oder
- in Walzrichtung hinter dem letzten Walzgerüst der Fertigstraße und/oder
- vor einem Treibapparat für den Haspel und/oder
- zwischen dem Treibapparat und dem Haspel
angeordnet ist / sind.

3. Anordnung nach Anspruch 1 oder 2,
**dadurch gekennzeichnet**,
daß die von der Meßrolle (1, 22, 31) erhaltenen Meßwerte zum Verschieben der Walzen der Walzgerüste in axialer Richtung, einer Veränderung der Biegung der Walzen sowie zum Schwenken von Anstellsystemen der Walzengerüste verwendet werden.

4. Anordnung nach einem der Ansprüche 1 bis 3,
**dadurch gekennzeichnet**,
daß mindestens eine Meßrolle (1, 22, 31) zwischen dem Treibapparat und dem Haspel angeordnet ist und der von dieser Meßrolle erhaltene Meßwert zum Verschwenken des Treibapparats verwendet wird.

5. Meßrolle für eine Anordnung nach einem der Ansprüche 1 bis 4,
**dadurch gekennzeichnet**,
daß die elastisch biegbare Meßrolle (1) hohl und in ortsfesten Lagern (2) drehbar gelagert ist und konzentrisch zur Achse (7) der unbelasteten Meßrolle eine sich in Achsrichtung im Inneren der Meßrolle erstreckende Halterung (8) für mindestens einen Meßwertaufnehmer (9) angeordnet ist.

6. Meßrolle nach Anspruch 5,
**dadurch gekennzeichnet**,
daß der Meßwertaufnehmer (9) ein Wegmesser ist.

7. Meßrolle nach Anspruch 5 oder 6,
**dadurch gekennzeichnet**,
daß die ortsfesten Lager (2) in Lagerböcken (3) gehalten sind, an denen Kraftmeßvorrichtungen (4) angeordnet sind.

8. Meßrolle nach Anspruch 5 oder 7,
**dadurch gekennzeichnet**,
daß ein mit den Lagerböcken (3) verbundener, biegesteifer Träger (5) die Lagerböcke auf Abstand hält.

9. Meßrolle nach einem der Ansprüche 5 bis 8,
**dadurch gekennzeichnet**,
daß in Abständen in Achsrichtung der Halterung (8) gleichmäßig über deren Umfang mehrere Meßwertaufnehmer (9) angeordnet sind.

10. Meßrolle nach einem der Ansprüche 5 bis 9,
**gekennzeichnet durch**
eine die Kräfte in mehreren Richtungen erfassende Meßvorrichtung (4).

11. Meßrolle nach einem der Ansprüche 5 bis 10,
**dadurch gekennzeichnet**,
daß die Halterung (8) einen Durchgang (12) in Achsrichtung mit Verbindungen zu den Meßwertaufnehmern (9) besitzt.

12. Meßrolle für eine Anordnung nach einem der Ansprüche 1 bis 4,
**dadurch gekennzeichnet**, daß
- die elastisch biegbare Meßrolle (32) hohl und in ortsfesten Lagern drehbar gelagert ist
- sich im Inneren der Meßrolle (32) ein Formkörper (33) mit Durchgängen (34, 35, 38) für ein hydrostatisches Medium erstreckt, wobei die Durchgänge (34, 35, 38) zumindest teilweise in dem zwischen Meßrolle (32) und Formkörper (33) gebildeten Hohlraum (36) münden und
- mit den Durchgängen (34, 35, 38) zumindest eine Durchflußmeßvorrichtung (40, 43) verbunden ist.

13. Meßrolle nach Anspruch 12,
**dadurch gekennzeichnet**,
daß die Durchgänge (34, 35, 38) im Bereich ihrer Mündungen taschen- oder trichterförmig erweitert sind.

14. Meßrolle nach Anspruch 12 oder 13,
**dadurch gekennzeichnet**,
daß mindestens ein Durchgang (34, 35) als Zufluß ausgebildet ist.
